# EUROPÄISCHE PATENTSCHRIFT

(11) **EP 1 152 928 B1**
(45) Veröffentlichungstag und Bekanntmachung des Hinweises auf die Patenterteilung: **24.07.2002**
(21) Anmeldenummer: 00918747.7
(22) Anmeldetag: 25.02.2000
(51) Int. Cl.: B60R 21/00, B60R 21/01

(54) **EINRICHTUNG UND VERFAHREN ZUM ERFASSEN EINES OBJEKTES ODER EINER PERSON IM INNENRAUM EINES FAHRZEUGS SOWIE VORRICHTUNG FÜR DEN PERSONENSCHUTZ IN EINEM FAHRZEUG MIT EINER SOLCHEN EINRICHTUNG**
SYSTEM AND METHOD FOR DETECTING AN OBJECT OR A PERSON IN A VEHICLE INTERIOR AND DEVICE FOR THE PROTECTION OF OCCUPANTS IN A VEHICLE WITH SUCH A SYSTEM
PROCEDE ET DISPOSITIF POUR DETECTER LA PRESENCE D'UN OBJET OU D'UNE PERSONNE DANS L'HABITACLE D'UN VEHICULE ET DISPOSITIF POUR ASSURER LA PROTECTION DES OCCUPANTS DANS UN VEHICULE EQUIPE D'UN SYSTEME DE CE TYPE

(30) Priorität: 25.02.1999 EP 99103697
(43) Veröffentlichungstag der Anmeldung: 14.11.2001
(73) Patentinhaber: SIEMENS AKTIENGESELLSCHAFT, 80333 München (DE)
(72) Erfinder: Roth, Christoph, Tokyo 141-8641 (JP); Waldmann, Alexander, 93059 Regensburg (DE); Hamperl, Reinhard, 93096 Köfering (DE); Stierle, Thomas, 93059 Regensburg (DE); Rösl, Reinhard, 93173 Wenzenbach (DE); Mader, Gerhard, 93107 Thalmassing (DE)
(86) Internationale Anmeldenummer: EP0001601
(87) Internationale Veröffentlichungsnummer: WO0050267

(56) Entgegenhaltungen:
- WO-A-97/35738
- DE-C- 4 406 897
- US-A- 5 366 241

## Beschreibung

Einrichtung und Verfahren zum Erfassen eines Objektes oder einer Person im Innenraum eines Fahrzeugs sowie Vorrichtung für den Personenschutz in einem Fahrzeug mit einer solchen Einrichtung gemäß den Oberbegriffen der Ansprüche 1 und 8.

Die Erfindung betrifft eine Einrichtung und ein Verfahren zum Erfassen eines Objektes oder einer Person im Innenraum eines Fahrzeugs sowie eine Vorrichtung für den Personenschutz in einem Fahrzeug mit einer solchen Einrichtung.

Weit in Richtung Armaturenbrett vorverlagerte Personen wie auch Kinder in sogenannten Reboard-Kindersitzen auf dem Beifahrersitz sind während des Fahrzeugbetriebes eines mit Airbag versehenen Kraftfahrzeuges der Gefahr ausgesetzt, durch die Aufblaswucht des Airbags bei einem Unfall Verletzungen zu erleiden. Moderne Steuerungssysteme für den Personenschutz sind bestrebt, den Airbag in derartigen Situationen abzuschalten oder mit verminderter Wucht aufzublasen, um die Gefahr einer Verletzung eines Insassen abzuwenden. Zur Ermittlung der Insassenposition im Fahrzeug werden vorzugsweise berührungslose, optische Sensoren eingesetzt.

Eine Gattungsgemäße Einrichtung bzw. ein gattungsgemäßes Verfahren ist aus DE 4 406 897 bekannt.

Die DE 195 47 333 A1 zeigt eine Einrichtung zum Erfassen eines Objektes oder einer Person im Innenraum eines Fahrzeugs. Dabei ist ein Sensor zum Erfassen eines Objektes oder einer Person in Form eines Wärmestrahlungsfühlers vorgesehen, der in der Kopfstütze des Beifahrersitzes angeordnet ist. Dem Sensor beigeordnet ist eine Steuereinheit für die Signalverarbeitung, die mit einer Steuereinrichtung für ein Personenschutzmittel verbunden ist.

Aufgabe der Erfindung ist es, das Auslöseverhalten einer Vorrichtung für den Personenschutz in einem Fahrzeug nach einem Auslösevorgang überprüfen zu können.

Der die Einrichtung oder die Personenschutzvorrichtung betreffende Teil der Erfindungsaufgabe wird erfindungsgemäß durch die Merkmale des Patentanspruchs 1 beziehungsweise des Patentanspruchs 5 gelöst. Der das Verfahren betreffende Teil der Erfindungsaufgabe wird durch die Merkmale des Patentanspruchs 9 gelöst.

Der Kern der Erfindung liegt darin, daß die Einrichtung zum Erfassen eines Objektes oder einer Person im Innenraum eines Fahrzeugs, enthaltend einen Sensor zum Erfassen eines Objektes oder einer Person, derart ausgebildet ist, daß sie bei Bedarf Sensordaten in einem zugehörigen Speicher ablegt. Dabei werden insbesondere die letzten verfügbaren Sensordaten abgelegt, auf deren Basis eine Entscheidung für oder gegen eine Auslösung des zugeordneten Personenschutzmittels herbeigeführt wurde. In einer vorteilhaften Weiterbildung der Erfindung können auch zeitlich zurückliegende Sensordaten abgespeichert werden, um die Historie einer Objekt- oder Personenposition nachvollziehen zu können.

Die Einrichtung selbst weist dabei eine Schnittstelle zur Anbindung an eine Steuereinrichtung für ein Personenschutzmittel auf. Über diese Schnittstelle übermittelt die Einrichtung einerseits Sensordaten oder ausgewertete Sensordaten und ampfängt andererseits einen Steuerbefehl von der Steuereinrichtung zum Abspeichern von Sensordaten.

Die Einrichtung zum Erfassen eines Objektes oder einer Person kann auf den Gefahrenbereich vor einem zusammengefalteten Airbagmodul in Aufblasrichtung gerichtet sein und damit das Vorhandensein eines Objektes oder einer Person in diesem Bereich mitteilen. Es sind jedoch auch Erfassungseinrichtungen für Objekte oder Personen anwendbar, die auf den Fahrzeugsitz gerichtet sind und und eine Abweichung einer Person aus seiner Normalsitzposition ermitteln können. Es sind auch Erfassungseinrichtungen anwendbar, die den gesamten vorderen Fahrzeuginnenraum abtasten und eine jegliche Art der Objekt- oder Personenposition erkennen können. Die Erfindung ist also nicht beschränkt auf das konkrete Erfassen eines Abbildes eines Objektes oder einer Person sondern insbesondere auch zur Überwachung von bestimmten Bereichen im Innenraum eines Fahrzeugs auf das Vorhandensein eines Objektes oder einer Person. Die Einrichtung ist dabei zur berührungslosen Erfassung ausgebildet.

Ein Sensor einer solchen Erfassungseinrichtung kann auf unterschiedlichen physikalischen Wirkungsprinzipien beruhen:

So kann der Sensor vorzugsweise seinen Wirkungsbereich mittels optischer Strahlung, insbesondere infraroter Strahlung abtasten. Es sind aber auch Strahlungen mit anderen Wellenlängen anwendbar. Der Sensor enthält dabei ein Leuchtdiode, insbesondere einen Infrarotsender in Form einer Laserdiode, der eine oder mehrere Strahlen oder Strahlungsvorhänge aussendet. Der Sensor enthält ferner ein oder mehrere optische Empfangselemente in Form von Fotozellen, die die an einem Objekt oder einer Person reflektierte oder gestreute Strahlung aufnehmen. Durch Auswertung der reflektierten Strahlung kann der Abstand zwischen dem Sensor und dem Objekt sowie gegebenenfalls eine Konturierung und genaue Positionsbestimmung im zwei- oder dreidimensionalen Raum bestimmt werden. Vorzugsweise spannt der Sensor mehrere in Fahrtrichtung hintereinandergestaffelte Strahlenvorhänge in der vertikalen Ebene auf und enthält hinsichtlich der Querachse des Fahrzeugs mehrere Empfangselemente je Strahlenvorhang. So ist eine dreidimensionale Personen- oder Objekterkennung gewährleistet, da jedes Empfangselement eine Information zweidimensionaler Wertigkeit liefert und die dritte, vertikale Dimension durch eine Auswertung der Stärke, der Leistung oder des Energieinhalts einer reflektierten Strahlung gewonnen wird. Eine Erfassungseinrichtung mit einfachen technischen Mitteln weist z.B. nur eine den Entfaltungsraum des Airbgas abtastende Lichtschranke auf.
Der Sensor der Erfassungseinrichtung kann auch als Kamera ausgebildet sein und Bilder liefern, die im folgenden Verfahren der Mustererkennung unterzogen werden.

Der Sensor kann aber auch als Wärmefühler in Form eines Infrarotaufnehmers ausgebildet sein, der das Vorhandensein und die Position einer lebenden Person durch die von ihr abgegebenen Wärmestrahlung ermitteln kann.

Ferner sind auch Ultraschallsensoren oder Mikrowellensensoren einsetzbar.

Eine Objekt- oder Personenposition bei aktiver Bestrahlung des Objektes oder der Person wird vorzugsweise mit Hilfe der Methoden der Laufzeitmessung oder der Triangulation ermittelt.

Die Steuereinrichtung für das Personenschutzmittel an sich ist hinreichend aus dem Stand der Technik bekannt. Eine solche Steuereinrichtung enthält einen Mikroprozessor zum Auswerten von Aufprallsignalen. Diese Aufprallsignale werden von einer Aufprallerfassungseinrichtung mit einer zugehörigen Aufprallsensorik geliefert. Dabei können als Aufprallsensoren Beschleunigungssensoren oder eine Karosseriedeformation erkennende Sensoren verwendet werden. Die Aufprallerfassungseinrichtung mit den zugehörigen Aufprallsensoren kann abseits der Steuereinrichtung angeordnet und über Leitungen oder einen Datenbus mit der Steuereinrichtung verbunden sein. Diese Topologie wird vorwiegend von Steuerungssystemen zum Seitenaufprallschutz beansprucht, bei denen nahe an den Aufprallort ausgelagerte Beschleunigungssensoren an den Fahrzeugseiten angeordnet sind. Alternativ oder zusätzlich eine Aufprallerfassungseinrichung mit Aufprallsensoren zusammen mit der Steuereinrichtung in einem zentral im Fahrzeug - beispielsweise am Fahrzeugtunnel - angeordneten Gehäuse untergebracht sein. Hierzu werden vorzugsweise Beschleunigungssensoren als Aufprallsensoren verwendet.

Die Steuereinrichtung steuert abhängig von der Aufprallerfassungseinrichtung gelieferten Signalen ein, mehrere oder aus mehreren Personenschutzmittel ausgewählte Personenschutzmittel an. Personenschutzmittel sind vorzugsweise Airbags, wie Fahrerairbag, Beifahrerairbag, Seitenairbag, Kopfairbag, Knieairbag oder auch Gurtstraffer, Überrollbügel etc.. Dabei wird durch die Steuereinrichtung veranlaßt, daß ein Zündelement eines Personenschutzmittels mit Strom beschickt wird.
Das zugehörige Zündelement kann anstelle einer herkömmlichen Zweidrahtzündleitung auch einen Datenbus als Verbindungsmittel mit der Steuereinrichtung aufweisen und vor Ort Energiereserven zum Zünden bereitstellen. Das Personenschutzmittel wird dann ausgelöst, wenn von der Steuereinrichtung ein codierter Zündbefehl an ein solches mit Auswerteintelligenz versehenes Zündelement übermittelt wird.

In vorteilhafter Weise wird ein Personenschutzmittel bei Vorhandensein einer Einrichtung zum Erfassen eines Objektes oder einer Person im Innenraum eines Fahrzeugs nur dann durch die Steuereinrichtung ausgelöst, wenn die Objekterfassungseinrichtung mitteilt, daß die Position einer Person auf dem Fahrzeugsitz, dessen zugeordnetes Personenschutzmittel ausgelöst werden soll, als ungefährlich für ein vollständiges Auslösen des Personenschutzmittels eingestuft wird, oder daß die Position Kindersitzes auf einem solchen Fahrzeugsitz als ungefährlich für ein vollständiges Auslösen des Personenschutzmittels eingestuft wird.

Bei einer als gefährlich eingestuften Objekt- oder Personenposition vermag dagegen die Steuereinrichtung ein aufgrund der Aufprallstärke oder der Aufprallart an sich erforderliches Auslösen des Personenschutzmittels zu unterbinden oder angemessen zu dosieren. Ein Dosieren ist nur bei einem Personenschutzmittel mit zwei Aktivierungsstufen oder bei einem steuerbaren Personenschutzmittel möglich. Dabei wird das Personenschutzmittel nur in dem Maße aktiviert wie es die Personen- oder Objektposition zuläßt.

Erfindungsgemäß kann nun eine Auslöse- oder Nichtauslöseentscheidung für ein Personenschutzmittel bei einem Aufprall rückwirkend überprüft werden. So kann der Nachweis der Funktionstüchtigkeit der Personenschutzvorrichtung erbracht werden. Dazu liegen alle die Auslöseentscheidung beeinflussenden Daten in gespeicherter Form zur Rekonstruktion der Auslöseentscheidung vor. Durch das erfindungsgemäße Abspeicherung von Sensordaten des Sensors zum Erfassen eines Objektes oder einer Person und das zusätzliche Abspeichern von Sensordaten der Aufprallerfassungseinrichtung ist eine vollständige Überprüfung der Auslöseentscheidung möglich.

Dabei können die Personen- und Objekt-Sensordaten selbst in dem Speicher abgelegt werden. Vom Schutz mitumfaßt ist das Ablegen von aus den Daten repräsentierenden aufgenommenen Sensorsignalen abgeleitete Signale/Daten wie auch Auswertungsergebnisse von Personen- und Objekt-Sensordaten. Dabei kann die Steuereinheit der erfindungsgemäßen Einrichtung bereits eine Signalauswertung durchgeführt haben und beispielsweise ein als Vorhanden erkanntes Objekt in seiner Position und Größe klassifiziert sein. Es wird dann lediglich die Positionsklasse und Größenklasse im Speicher abgelegt.

Erfindungsgemäß werden die Personen- und Objekt-Sensordaten nicht in einem Speicher der Personenschutzmittelsteuereinrichtung abgelegt, sondern in einem der Einrichtung zum Erfassen eines Objektes oder einer Person zugeordneten Speicher. Aufgrund der räumlichen Trennung der Einrichtung zum Erfassen eines Objektes oder einer Person, deren Einbauort durch die Art des Sensors, seine Reichweite und sein Meßfeld bestimmt ist und beispielsweise die A-Säule oder der Dachhimmel ist, und der Steuereinrichtung, die vorzugsweise am Fahrzeugtunnel zentral im Kraftfahrzeug angeordnet ist, ist eine vorzugsweise elektrisch Verbindung zwischen diesen Einrichtungen erforderlich. Dabei liefert die Objekterfassungseinrichtung Sensordaten oder ausgewertete Sensordaten über eine Zweidrahtleitung oder einen Datenbus in analoger oder digitaler Form an die zentrale Steuereinrichtung. In einer vorteilhaften Weiterbildung der Erfindung wird die Objekterfassungseinrichtung nur dann aktiviert und zum Aufnehmen und anschließenden Übermitteln von Sensordaten veranlaßt, wenn aufgrund von Daten der Aufprallerfassungseinrichtung durch die zentrale Steuereinrichtung zumindest ein Aufprallbeginn, z. B. anhand des Überschreitens einer Mindestverzögerung erkannt wird. Durch das Abspeichern der dann für eine Dokumentation der Auslöseentscheidung erforderlichen Sensordaten direkt in der Objekterfassungseinrichtung als eigenständiges elektrisches Gerät mit dem Sensor, der Steuereinheit, dem Speicher, einer Energieversorgung und einer Schnittstelle, kann in der zentralen Steuereinrichtung der Aufwand in Form von zur Verfügung zu stellendem Speicherplatz und Rechenleistung reduziert beziehungsweise gering gehalten werden. Auch wird die Datenübertragungsrate zwischen Objekterfassungseinrichtung und Steuereinrichtung reduziert, da eine gegebenenfalls nur zum Zwecke des Datenspeicherns in der zentralen Steuereinrichtung erforderliche Sensordatenübertragung seitens der Objekterfassungseinrichtung vermieden wird

In einer vorteilhaften Weiterbildung der Erfindung wird von der zentralen Steuereinrichtung ein Steuerbefehl zum Abspeichern von Sensordaten in der Objekterfassungseinrichtung erzeugt und an die Objekterfassungseinrichtung übermittelt, wenn ein zum Auslösen eines Personenschutzmittels ausreichend starker Aufprall erkannt wird wie auch eine Personen- oder Objektposition, die zumindest ein partielles Auslösen des Personenschutzmittels erlaubt. Ein solcher Steuerbefehl wird vorzugsweise auch für weitere ausgelagerte Aufprallsensoren erzeugt. Auch die bei der zentralen Steuereinrichtung angeordneten Sensoren zur Aufprallerkennung legen ihre zuletzt ermittelten Werte in einem Speicher der zentralen Steuereinrichtung ab.

Vorzugsweise wird dieser an die Objekterfassungseinrichtung übermittelte Steuerbefehl auch dann erzeugt, wenn zwar ein ausreichend starker Aufprall, nicht aber eine ein Auslösen des Personenschutzmittels rechtfertigende Insassenposition erkannt wird und damit aufgrund der Sensordaten der Objekterfassungseinrichtung ein Auslösen des Personenschutzmittels unterdrückt wird. Auch eine solche Entscheidung ist dennoch für den bestmöglichen Schutz der Person von höchster Bedeutung und deshalb als nachvollziehbar erwünscht.

In einer weiteren vorteilhaften Weiterbildung der Erfindung wird bereits zu einem frühen Zeitpunkt, zu dem eine Entscheidung über das Auslösen oder Nichtauslösen eines Personenschutzmittels noch nicht getroffen ist, mit der Aufzeichnung von Sensordaten in der Objekterfassungseinrichtung begonnen. Dabei wird ein entsprechender Steuerbefehl von der zentralen Steuereinrichtung zu Aufprallbeginn übermittelt. Ein Aufprallbeginn wird insbesondere dadurch erkannt, daß ein oder mehrere Signale der Aufprallerfassungseinrichtung einen Mindestgrenzwert überschreiten und somit den Beginn eines möglicherweise sich verstärkenden Aufpralls ankündigen. Ein solcher Aufprallbeginn kann aber auch anhand von Signalen anderer, die Fahrzeugdynamik aufnehmende Geräte/Sensoren festgesetzt werden. Solche Signale können vorzugsweise von einer Fahrdynamikregelung, von einem Bremsassistenten, von einem Antiblockiersystem oder von Abstandssensoren zum Ermitteln des Abstandes des Fahrzeugs zu einem Hindernis geliefert werden. Die Speicherkapazität in der Objekterfassungseinrichtung kann dann insbesondere derart bemessen sein, daß ausreichend Speicherplatz für alle Sensordatensätze vorgesehen ist, die ab Aufprallbeginn bis zu einer Auslöse- oder Nichtauslöseentscheidung oder aber bis zu einem festgelegten Zeitpunkt ab Aufprallbeginn ermittelt werden. Wird beispielsweise der Objekterfassungssensor mit einem Abtastvorgang pro Millisekunde betrieben, so ist der Speicherplatz derart bemessen, daß 50 Sensordatensätze gespeichert werden können, welche den Verlauf der Insassen- oder Objektposition innerhalb von 50 ms ab Aufprallbeginn wiedergeben. Zum Ende einer solchen Zeitspanne oder beim Treffen einer Auslöse- oder Nichtauslöseentscheidung bildet die Steuereinheit der Objekterfassungseinrichtung den Speicher als nicht mehr beschreibbar aus. Dabei wird beispielsweise ein entsprechendes Flag gesetzt, das eine weitere Beschreibung des für ein späteres Auslesen vorzugsweise nicht löschbar und insbesondere als EEPROM ausgebildeten Speichers möglich macht. Alternativ kann ein entsprechender Steuerbefehl auch von der zentralen Steuereinrichtung erzeugt werden, der im folgenden von der Steuereinheit der Objekterfassungseinrichtung entsprechend umgesetzt wird.

In einer vorteilhaften Weiterbildung der Erfindung wird nur immer ein Sensordatensatz, der ein Abbild einer Objekt- oder Insassenposition zu einem bestimmten Zeitpunkt darstellt, im Speicher abgelegt. Wird dabei zum Zeitpunkt des Aufprallbeginns mit einem Niederschreiben der entsprechenden Sensordaten in den Speicher begonnen, so wird der jeweils vorhergehend abgelegte Sensordatensatz wieder überschrieben. Dabei wird ebenfalls durch die Steuereinheit selbst oder durch die zentrale Steuereinrichtung sichergestellt, daß zumindest ab getroffener Auslöseentscheidung ein Niederschreiben von Sensordaten im Speicher abgebrochen oder beendet wird oder ein Beschreiben des Speichers unmöglich gemacht wird.

In einer weiteren vorteilhaften Weiterbildung der Erfindung werden die Sensordaten bei mitgeteiltem Aufprallbeginn aber nicht erfolgter Auslösung nicht weiter festgehalten und ausgewertet. Von der zentralen Steuereinrichtung wird ein entsprechender Steuerbefehl an die Objekterfassungseinrichtung übermittelt, die den Speicher für weitere Datenaufzeichnungen freigibt und gegebenenfalls davor löscht.

Weitere vorteilhafte Weiterbildungen der Erfindung sind durch die Unteransprüche gekennzeichnet.

Ausführungsbeispiele der Erfindung und ihrer Weiterbildungen werden anhand der Zeichnungen näher erläutert. Es zeigen:
- Figur 1: einen Querschnitt einer Fahrgastzelle, beifahrerseitig,
- Figur 2: ein Blockschaltbild der erfindungsgemäßen Vorrichtung, und
- Figur 3: Ablaufdiagramme zweier erfindungsgemäßer Verfahren.

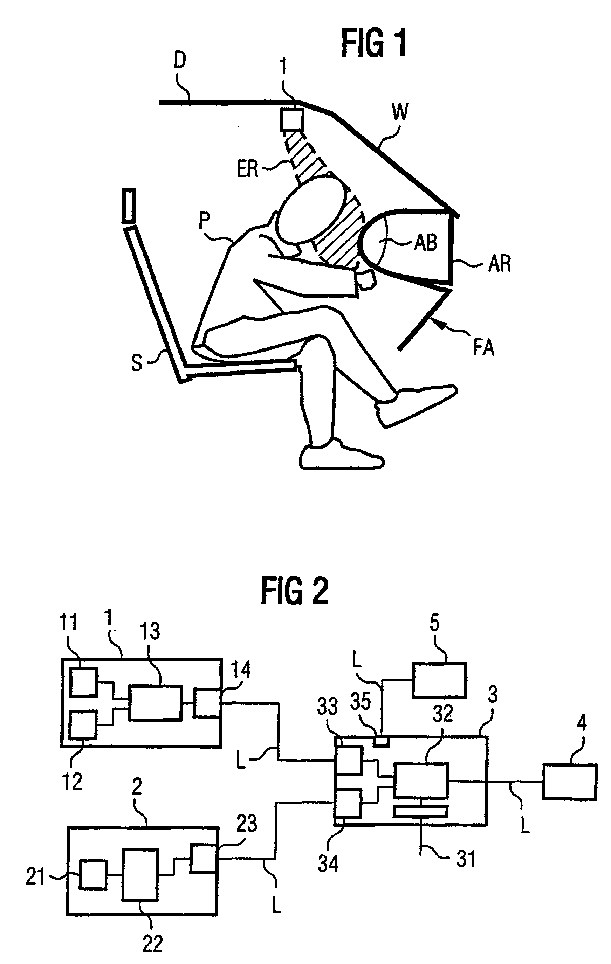

Figur 1 zeigt einen Querschnitt der vorderen Fahrgastzelle, beifahrerseitig, wobei alle Elemente symbolisch eingezeichnet sind. Dabei ist der Fahrzeuginnenraum durch ein Dach D, eine Windschutzscheibe W, ein Armaturenbrett AR und ein Fußablage FA begrenzt. Zur Abgrenzung des Fahrzeuginnenraums muß jedoch nicht notwendigerweise das Dach D und damit eine geschlossene Fahrgastzelle vorhanden sein. Es ist ein Fahrzeugsitz S ersichtlich, auf dem eine Person P in vorverlagerter Oberkörperposition sitzt. Am Dach D ist eine Einrichtung zum Erfassen eines Objektes oder einer Person angeordnet. Diese Einrichtung weist einen eingezeichneten Wirkungsbereich ER auf. Das Armaturenbrett AR enthält ein Beifahrerairbagmodul AB im zusammengefalteten Zustand. In entfaltetem Zustand schießt der Beifahrerairbag in Richtung Kopf der eingezeichneten Person P.

Figur 2 zeigt ein Blockschaltbild einer erfindungsgemäßen Vorrichtung mit einer Einrichtung 1 zum Erfassen eines Objektes oder einer Person im Innenraum eines Fahrzeugs, einer Einrichtung 2 zum Erfassen eines Aufpralls, einem Abstandssensor 5 und einer Steuereinrichtung 3 für ein Personenschutzmittel 4. Die Einrichtungen 1, 2, 5 und 3 sowie das Personenschutzmittel 4 sind dabei räumlich beabstandet voneinander angeordnet und über Leitungen L gemäß Figur 2 miteinander verbunden.

Die Objekterfassungseinrichtung 1 enthält dabei einen Sensor 11 zum Erfassen eines Objektes oder einer Person, einen nichtflüchtigen Speicher 12, eine Steuereinheit 13 und eine Schnittstelle 14. Die Aufprallerfassungseinrichtung 2 enthält einen Aufprallsensor 21, eine Steuereinheit 22 und eine Schnittstelle 23. Die Steuereinrichtung 3 enthält drei Schnittstellen 33, 34 und 35, einen Aufprallsensor 31 und eine Steuereinheit 32. Der Radar-Abstandssensor 5 ist an der Stoßstange des Kraftfahrzeugs angeordnet und erkennt das Annähern eines Hindernisses. Die Einrichtung 1, 2, 3 und 5 sind vorzugsweise als eigene elektrische Geräte ausgebildet, vorzugsweise mit einem eigenen Gehäuse und einer eigenen Energieversorgung.

Die Aufprallsensoren 21 und 31 sind beispielsweise als Beschleunigungssensoren ausgebildet, wobei der Beschleunigungssensor 21 ausgelagert in der Frontpartie des Fahrzeugs zum Erkennen eines Seitenaufpralls, der Beschleunigungssensor 31 dagegen zentral bei der Steuereinrichtung 3 etwa im Schwerpunkt des Kraftfahrzeugs zum Erkennen eines Frontaufpralls angeordnet ist. Die Steuereinheit 22 der Aufprallerfassungseinrichtung 2 führt eine Signalverarbeitung des von dem Aufprallsensor 21 gelieferten Signal durch und übermittelt entsprechend aufbereitete Signale über die Schnittstelle 23, die Leitung L und die Schnittstelle 34 an die Steuereinheit 32 an die zentralen Steuereinrichtung 3. Die Signale des zentralen Aufprallsensors 31 werden direkt der Steuereinheit 33 zugeführt. Als übermittelte Signale der Aufprallerfassungseinheit dienen vorzugsweise durch die Signalverarbeitungsschaltung 22 ermittelte Aufprallzustände, die anhand ihrer Intensitäten klassifiziert werden. Der Sensor 11 der Objekterfassungseinrichtung 1 liefert seine Signale an die Steuereinheit 13, die im wesentlichen Signalverarbeitungsroutinen durchführt. Die Steuereinheit 13 dient aber auch der Ansteuerung des Sensors 11, sofern dieser steuerbar ausgebildet ist. Die Steuereinheit 13 übermittelt über die Schnittstelle 14, die Leitung L und die Schnittstelle 33 vorzugsweise ausgewertete Sensorindaten an die zentrale Steuereinrichtung 3. Dabei werden vorzugsweise Zustandsdaten über den abgetasteten Bereich übermittelt. Einzelne Datenworte können den Inhalt aufweisen: "Person im Gefahrenbereich erkannt", "Objekt im Gefahrenbereich erkannt", "Kein Objekt und keine Person im Gefahrenbereich erkannt".

Die Steuereinheit 32 der zentralen Steuereinrichtung 3 verarbeitet die zugeführten Daten algorithmisch. Aufgrund von festgelegten Verarbeitungsvorschriften trifft die Steuereinheit 32 letztendlich abhängig von den zugeführten Daten die Entscheidung, ob das über die Leitung L angeschlossene Personenschutzmittel 4 ausgelöst wird oder nicht. Bei mehreren angeschlossenen Personenschutzmitteln trifft die Steuereinheit 32 darüberhinaus die Entscheidung, welches der Personenschutzmittel 4 ausgelöst wird.

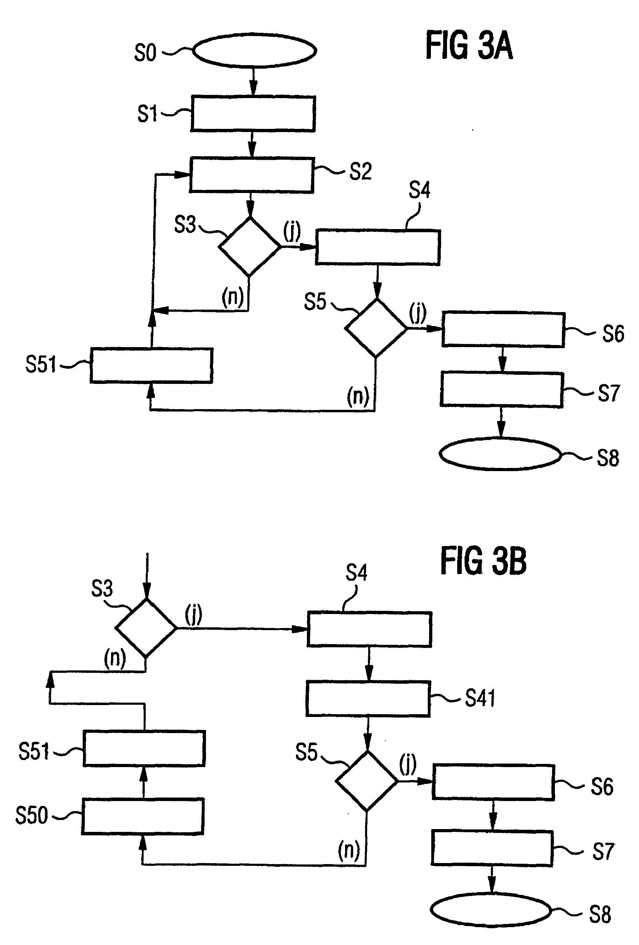

Die Figur 3 zeigt in Diagrammen a) und b) Ablaufdiagramme zweier erfindungsgemäßer Verfahren. Dabei kennzeichnet der Schritt S0 in Diagramm 3a) die Initialisierung der Vorrichtung für den Personenschutz, beispielsweise als Folge einer Betätigung der Fahrzeugzündung. Im Schritt S1 werden initiale Diagnosenroutinen innerhalb der Vorrichtung durchgeführt und dabei beispielsweise die Funktionsfähigkeit der Objekterfassungseinrichtung und der Aufprallerfassungseinrichtung wie auch die Funktionsfähigkeit von Zündeinheiten überprüft. Im Schritt S2 wird damit begonnen, die Signale der Aufprallsensoren auf einen Aufprallbeginn hin zu überwachen. Dabei wird in Schritt S3 überprüft, ob das Beschleunigungssignal eines Aufprallsensors eine Mindestschwelle überschreitet. Ist dies gemäß Schritt S3 nicht der Fall (n), so wird eine Überwachung der Aufprallsignale fortgesetzt. Wird jedoch ein Aufprallbeginn erkannt (j), so wird mit Schritt S4 die Objekterfassungseinrichtung aktiviert und damit zum Aufnehmen von Bildern veranlaßt. Wird im Schritt S5 durch weitergehende Überwachung und Auswertung von Aufprallsignalen ein zum Auslösen eines Personenschutzmittels ausreichend starker Aufprall und gleichzeitig eine Insassenposition erkannt, die einem Aufblasen des zugeordneten Airbags nicht hinderlich ist, so wird im Schritt S6 durch die zentrale Steuereinheit ein Zündbefehl an das zugeordnete Personenschutzmittel gerichtet. Im Schritt S7 wird unmittelbar nach Schritt S6 (gegebenenfalls auch vor Schritt S6 oder gleichzeitig mit Schritt S6) ein Steuerbefehl von der zentralen Steuereinrichtung 3 zur Objekterfassungseinrichtung 1 abgesetzt mit dem Inhalt, die zuletzt ermittelten Sensordaten abzuspeichern. Mit Schritt S8 ist das Verfahren beendet. Werden zumindest innerhalb einer vorgegebenen Zeit ab Aufprallbeginn mit Schritt S5 die Auslösebedingungen nicht erfüllt (n), so werden im Schritt S51 die bislang angestellten Berechnungen zurückgesetzt und mit Schritt S2 daqs Vorhandensein eines Aufprallbeginns ermittelt.

Diagramm 3b) zeigt ein weiteres Ablaufdiagramm eines erfindungsgemäßen Verfahrens, wobei in der Erläuterung mit Schritt S3 aus Diagramm 3b) begonnen wird. Wird ein Aufprallbeginn festgestellt (j), so wird mit Schritt S4 die Objekterfassungseinrichung aktiviert. Im Schritt S41 wird daraufhin die Objekterfassungseinrichtung durch die zentrale Steuereinrichtung veranlaßt, Sensordaten im Speicher der Objekterfassungseinrichtung abzulegen. Werden mit Schritt S5 die Bedingungen zum Auslösen eines Personenschutzmittels erfüllt (j), wird wiederum mit Schritt S6 das Personenschutzmittel gezündet. Mit Schritt S7 wird nun im Gegensatz zum Verfahren nach Diagramm 3a die Datenaufzeichnung in der Objekterfassungseinrichtung beendet. Wird im Schritt S5 jedoch gegen ein Auslösen des Personenschutzmittels entschieden (n), so wird mit Schritt S50 der Speicher der Objekterfassungseinrichtung gelöscht und mit Schritt S51 ein Reset der gesamten Berechnungen durchgeführt.

Eine Aufnahme von Sensordaten kann aber nicht nur bei einem bevorstehenden Aufprall erfolgen sondern auch zyklisch während des Fahrzeugbetriebes. Der Speicher ist dann vorzugsweise als Ringspeicher ausgebildet.

## Patentansprüche

1. Einrichtung zum Erfassen eines Objektes oder einer Person im Innenraum eines Fahrzeugs,
- mit einem Sensor (11) dafür,
- mit einem Speicher (12),
- mit einer Steuereinheit (13) zum Abspeichern von Sensordaten oder daraus abgeleiteten Daten im Speicher (12) bei einem entsprechenden, von einer Steuereinrichtung (3) für ein Personenschutzmittel zugeführten Steuerbefehl,
- **dadurch gekennzeichnet, daß** die Steuereinheit (13) das Speichern einer über die Schnittstelle (14) übermittelten Aufprallkennung im Speicher (12) veranlaßt.

2. Einrichtung nach Anspruch 1, bei der die abgespeicherten Sensordaten die jeweils zuletzt aufgenommenen Sensordaten oder daraus abgeleitete Daten sind.

3. Einrichtung nach einem der vorhergehenden Ansprüche, bei der der Speicher (12) nichtflüchtig ausgebildet ist.

4. Vorrichtung für den Personenschutz in einem Fahrzeug,
- mit einer Steuereinrichtung (3) für ein Personenschutzmittel (4),
- mit einer mit der Steuereinrichtung (3) verbundenen Einrichtung (2) zur Aufprallerfassung, und
- mit einer mit der Steuereinrichtung (3) verbundenen und räumlich getrennt von ihr angeordneten Einrichtung (1) zum Erfassen eines Objektes oder einer Person im Innenraum eines Fahrzeugs nach einem der vorhergehenden Ansprüche,
- bei der die Steuereinrichtung (3) zum Ausgeben des Steuerbefehls ausgebildet ist.

5. Vorrichtung nach Anspruch 4, bei der die Steuereinrichtung (3) zum Ausgeben des Steuerbefehls ausgebildet ist, wenn das Personenschutzmittel (4) ausgelöst wird.

6. Vorrichtung nach Anspruch 4 oder Anspruch 5, bei der die Steuereinrichtung (3) zum Ausgeben des Steuerbefehls abhängig von einem Aufprallsignal der Aufprallerfassungseinrichtung (2) ausgebildet ist.

7. Vorrichtung nach einem der Ansprüche 4 bis 6, bei der die Steuereinrichtung (3) zum Ausgeben des Steuerbefehls ausgebildet ist, wenn der Beginn eines Aufpralls durch Überschreiten eines Schwellwertes durch das Aufprallsignal erkannt wird.

8. Verfahren zum Erfassen eines Objektes oder einer Person im Innenraum eines Fahrzeugs,
- bei dem ein Sensor (11) ein Objekt oder eine Person erfaßt,
- bei dem Daten des Sensors (11) oder daraus abgeleitete Daten an eine räumlich getrennt von dem Sensor (11) angeordnete Steuereinrichtung (3) für ein Personenschutzmittel (4) geliefert werden,
- bei dem die Sensordaten oder daraus abgeleitete Daten in einer den Sensor (11) enthaltenden Einrichtung (1) gespeichert werden bei einem der Einrichtung (1) zugeführten entsprechenden Steuerbefehl,
- **dadurch gekennzeichnet, daß** die Sensordaten oder daraus abgeleitete Daten gespeichert werden, wenn das Personenschutzmittel (4) ausgelöst werden soll oder ausgelöst wird.

9. Verfahren nach Anspruch 9, bei dem die Sensordaten oder daraus abgeleitete Daten gespeichert werden, wenn der Beginn eines Aufpralls erkannt wird.

10. Verfahren nach Anspruch 9, bei dem der Speichervorgang beendet wird, wenn ein Auslösen des Personenschutzmittels (4) nicht erfolgt ist.

## Claims

1. Device for sensing an object or a person in the interior of a vehicle,
- having a sensor (11) for that purpose,
- having a memory (12),
- having a control unit (13) for storing sensor data or data derived therefrom in the memory (12) when there is a corresponding control command which is supplied by a control device (3) for a vehicle occupant protection means,
- **characterized in that** the control unit (13) causes an impact code which is transmitted via the interface (14) to be stored in the memory (12).

2. Device according to Claim 1, in which the stored sensor data is the sensor data which has respectively been recorded last or data derived therefrom.

3. Device according to one of the preceding claims, in which the memory (12) is of nonvolatile construction.

4. Apparatus for vehicle occupant protection,
- having a control device (3) for a vehicle occupant protection means (4),
- having a device (2) for impact sensing, which is connected to the control device (3), and
- having a device (1) which is connected to the control device (3), is arranged spatially separate from it and has the purpose of sensing an object or a person in the interior of a vehicle according to one of the preceding claims,
- in which the control device (3) is designed to output the control command.

5. Apparatus according to Claim 4, in which the control device (3) is designed to output the control command if the vehicle occupant protection means (4) is triggered.

6. Apparatus according to Claim 4 or Claim 5, in which the control device (3) is designed to output the control command as a function of an impact signal of the impact sensing device (2).

7. Apparatus according to one of Claims 4 to 6, in which the control device (3) is designed to output the control command if the start of an impact is detected as a result of a threshold value being exceeded by the impact signal.

8. Method for sensing an object or a person in the interior of a vehicle,
- in which a sensor (11) senses an object or a person,
- in which data of the sensor (11) or data derived therefrom is supplied to a control device (3), arranged spatially separate from the sensor (11), for a vehicle occupant protection means (4),
- in which the sensor data or data derived therefrom is stored in a device (1) containing the sensor (11) when there is a corresponding control command supplied to the device (1),
- **characterized in that** the sensor data or data derived therefrom is stored if the vehicle occupant protection means (4) is to be triggered or is triggered.

9. Method according to Claim 8, in which the sensor data or data derived therefrom is stored if the start of an impact is detected.

10. Method according to Claim 9, in which the storage procedure is terminated if the vehicle occupant protection means (4) has not been triggered.

## Revendications

1. Dispositif destiné à détecter la présence d'un objet ou d'une personne dans l'habitacle d'un véhicule
- avec un capteur (11) prévu à cet effet,
- avec une mémoire (12),
- avec une unité de commande (13) destinée à mémoriser, dans la mémoire (12), des données de capteurs et des données qui en sont déduites, sur une instruction de commande correspondante envoyée par un dispositif de commande (3) pour un moyen de protection des personnes,
**caractérisé par le fait que**
l'unité de commande (13) provoque la mémorisation dans la mémoire (12) d'un indicatif de collision transmis par l'intermédiaire de l'interface (14).

2. Dispositif selon la revendication 1 dans lequel les données de capteurs mémorisées sont, dans chaque cas, les données de capteurs enregistrées en dernier ou des données qui en sont déduites.

3. Dispositif selon l'une des revendications précédentes dans lequel la mémoire (12) est conçue comme mémoire non volatile.

4. Système destiné à la protection des personnes dans un véhicule
- avec un dispositif de commande (3) pour un moyen de protection des personnes (4),
- avec un dispositif (2), destiné à la détection des collisions et relié au dispositif de commande (3),
- avec un dispositif (1), relié au dispositif de commande (3) et monté séparément de celui-ci, destiné à détecter un objet ou une personne dans l'habitacle d'un véhicule selon l'une des revendications précédentes,
- dans lequel le dispositif de commande (3) est conçu pour émettre l'instruction de commande.

5. Système selon la revendication 4 dans lequel le dispositif de commande (3) est conçu pour émettre l'instruction de commande lorsque le moyen de protection des personnes (4) est déclenché.

6. Système selon la revendication 4 ou la revendication 5 dans lequel le dispositif de commande (3) est conçu pour émettre l'instruction de commande en fonction d'un signal de collision venant du dispositif de détection de collisions (2).

7. Système selon l'une des revendications 4 à 6 dans lequel le dispositif de commande (3) est conçu pour émettre l'instruction de commande lorsque le début d'une collision est reconnue par le dépassement par le signal de collision d'une valeur de seuil.

8. Procédé destiné à détecter la présence d'un objet ou d'une personne dans l'habitacle d'un véhicule
- dans lequel un capteur (11) détecte un objet ou une personne,
- dans lequel des données du capteur (11) ou des données qui en sont déduites, sont délivrées à un dispositif de commande (3), monté séparément du capteur (11), pour un moyen de protection des personnes (4),
- dans lequel les données de capteurs ou des données qui en sont déduites, sont mémorisées dans un dispositif (1), renfermant le capteur (11), sur une instruction de commande correspondante appliquée au dispositif (1),
**caractérisé par le fait que**
les données de capteurs ou les données qui en sont déduites, sont mémorisées lorsque le moyen de protection des personnes (4) doit être déclenché ou est déclenché.

9. Procédé selon la revendication 8
dans lequel les données de capteurs ou les données qui en sont déduites, sont mémorisées lorsque le début d'une collision est reconnu.

10. Procédé selon la revendication 9
dans lequel le processus de mémorisation est arrêté lorsqu'un déclenchement du moyen de protection des personnes (4) ne se produit pas.
